# EUROPEAN PATENT APPLICATION

(11) **EP 2 287 456 A1**
(43) Date of publication of application: **23.02.2011**
(21) Application number: 09167992.8
(22) Date of filing: 17.08.2009
(51) Int. Cl.: F02C 1/08, F02C 3/34, F23L 7/00

(54) **Gas turbine and method for operating a gas turbine**

(71) Applicant: Alstom Technology Ltd, 5400 Baden (CH)
(72) Inventor: Schaer, Heinz, 5242, Birr (CH); Carroni, Richard, 5443, Niederrohrdorf (CH); Burdet, Andre, 6300, Zug (CH)

(57) **Abstract**

The gas turbine (1) comprises a compressor (2) that compresses an oxidiser containing flow and supplies it to at least a combustion chamber (3, 7), wherein a fuel is injected and a mixture formed; the mixture is then combusted generating a flue flow that is expanded in a turbine (8). The flue flow downstream of the a turbine (8) is diverted in a first flue flow (9) that is mixed with an air flow (12) to generate the oxidiser containing flow that is fed to the compressor (2), and a second flue flow (13) that is fed to a CO₂ capture unit (15). One or more combustion chambers (3, 7) have injectors (20) arranged to locally inject a pilot oxidiser in a zone of the combustion chamber (3, 7) where a flame (21) is housed. The present invention also refers to a method for operating a gas turbine.

## Description

### TECHNICAL FIELD

The present invention relates to a gas turbine and a method for operating a gas turbine.

In particular the present invention refers to a gas turbine provided with a CO₂ capture unit to reduce and control the amount of CO₂ released into the atmosphere.

The gas turbine and the method of the invention can be implemented in single or combined cycle plants.

### BACKGROUND OF THE INVENTION

Gas turbines comprise a compressor that feeds compressed air to a first combustion chamber wherein a fuel is injected and mixed with the compressed air to form a mixture that is combusted to generate a first flue flow that is expanded in a high pressure turbine.

This first flue flow (still rich in oxygen) is then fed to a second combustion chamber where further fuel is injected to form a mixture that is combusted, generating a second flue flow that is expanded in a low pressure turbine (sequential combustion gas turbine).

In addition, in order to reduce the amount of CO₂ released into the atmosphere, these gas turbines are often also provided with a CO₂ capture unit.

Typically the second flue flow is diverted partly in the CO₂ capture unit to be treated (to extract the CO₂ therefrom) and then discharged, and partly it is fed upstream of the compressor (in addition to the air).

These units let the amount of CO₂ released into the atmosphere be limited.

Naturally also gas turbine with a traditional compressor, combustion chamber and turbine configuration are often provided with a CO₂ capture unit.

For example US 2008/0, 010, 967 discloses a gas turbine having a first and second inter-cooled compressors, a combustion chamber and a turbine; the compressors and the turbine are connected to a shaft also connected to a generator. The flue flow discharged from the turbine is partly diverted and fed into the compressor (in addition to air).

Between the first and the second compressors an intercooler is provided and, in addition, a CO₂ capture unit or CO₂ separator unit, arranged to extract CO₂ from the gases passing through the compressors and stock it.

In both gas turbines described, the CO₂ capture unit is designed to operate with a prefixed flue flow rate and CO₂ concentration of the flue flow.

Ideally the amount of CO₂ recirculated should be as high as possible, in order to increase the CO₂ concentration and reduce the flue flow rate to be treated in the CO₂ capture unit.

Nevertheless, during operation both the flue flow rate and its CO₂ concentration may change, typically according to the gas turbine load.

In fact, during operation at full load the combustion chamber (or both the first and the second combustion chambers in case of sequential combustion gas turbine) must have a minimum oxygen concentration to guarantee a correct combustion.

This causes the amount of flue flow that can be recirculated to be limited, in order to guarantee that each combustion chamber always has at least the minimum amount of oxygen needed.

In practice, with a sequential combustion gas turbine operating at full load, the amount of flue flow that can be recirculated is about 45% of the total amount of flue flow.

During operation at part load, the flame temperature decreases and, thus, the reactivity also decreases.

In fact, the reactivity R is strongly influenced by the oxygen concentration and temperature according to a function:

R≈K [O₂] a^{T}

wherein: [O2] is the oxygen concentration, a is a proportionality constant and T is the flame temperature; K is a function of a number of parameters such as the fuel concentration, turbulence time scale, length scale, turbulence intensity, etc.

If the flame temperature decreases, the combustion is not stable and causes the formation of a large amount of non-combusted products and pressure oscillations.

It is clear that in this situation, in order to keep the operation as stable as possible and not to impair the gas turbine, when the flame temperature decreases, such as at part load, the flue gas recirculation must be sensibly reduced to increase the oxygen concentration (i.e. [O₂]) in the combustion chamber.

Practically, the amount of flue flow that can be recirculated in a sequential combustion gas turbine operating at part load is about 35% of the flue flow.

Therefore, as at part load the amount of flue flow that is recirculated is small, the amount of flue flow that passes through the CO₂ capture unit is very high.

In addition, as the concentration of CO₂ in the flue flow increases with increasing flue flow that is recirculated, the flue flow that passes through the CO₂ capture unit has a low CO₂ concentration (lower than at full load).

For these reasons, the CO₂ capture unit must be designed such that it is able to treat the large flue flow that is discharged at part load and, in addition, with the low CO₂ concentration of the part load operation.

Therefore during operation at full load (usually a gas turbine should operate at full load) the CO₂ capture unit operates in non-optimal conditions.

In addition the plant and operating costs of the CO₂ capture unit are high, because the CO₂ capture unit is sized to operate with a flue flow greater than that of full load and a CO₂ concentration lower than that of full load (i.e. it is overdimensioned).

### SUMMARY OF THE INVENTION

The technical aim of the present invention is therefore to provide a gas turbine and a method by which the said problems of the known art are eliminated.

Within the scope of this technical aim, an aspect of the invention is to provide a gas turbine and a method with which the CO₂ capture unit may operate at optimal conditions over the whole load range of the gas turbine.

Another aspect of the invention is to provide a gas turbine and a method with which the plant and operating costs of the CO₂ capture unit are reduced when compared with those of corresponding traditional gas turbines.

The technical aim, together with these and further aspects, are attained according to the invention by providing a gas turbine and a method in accordance with the accompanying claims.

Advantageously, with a gas turbine and method according to the invention, the flue gas recirculation ratio (FGR) can be increased at all loads, to get a more efficient, smaller and cheaper CO₂ capture unit.

### BRIEF DESCRIPTION OF THE DRAWINGS

Further characteristics and advantages of the invention will be more apparent from the description of a preferred but non-exclusive embodiment of the gas turbine and method according to the invention, illustrated by way of non-limiting example in the accompanying drawings, in which:

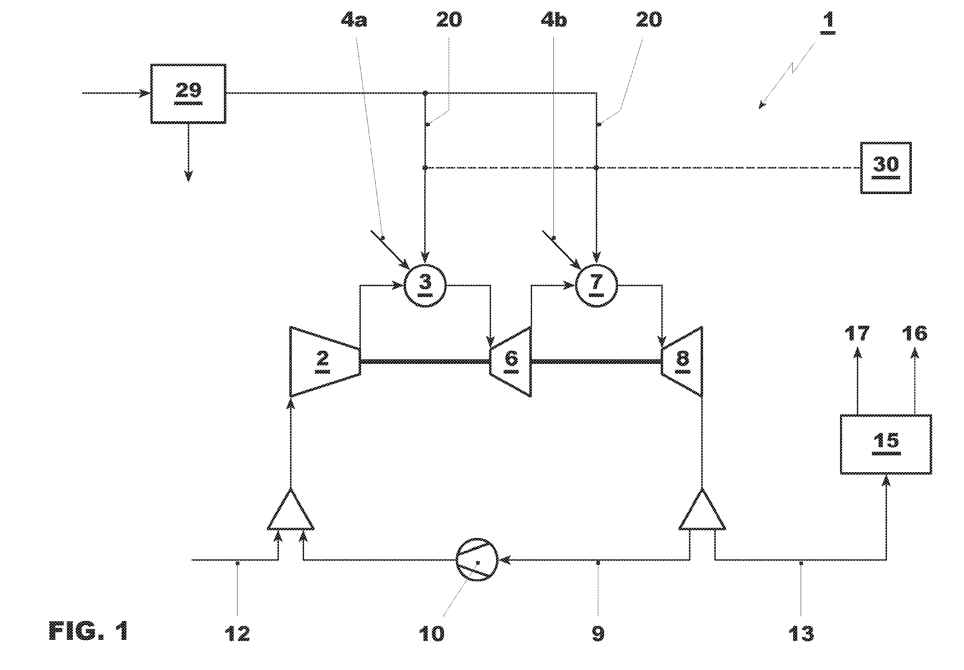

Figure 1 is a schematic view of an embodiment of a gas turbine according to the invention;
Figure 2 is a further embodiment of a gas turbine according to the invention;
Figure 3 is a sketch showing an embodiment of a burner in a combustion chamber of a gas turbine of the invention;
Figures 4 shows a diagram indicative of the FGR ratio of a traditional gas turbine and two different gas turbines embodiments of the invention.

### DETAILED DESCRIPTION OF THE INVENTION

With reference to the figures, these show a gas turbine 1 being a sequential combustion gas turbine.

The gas turbine 1 comprises a compressor 2 that compresses an oxidiser containing flow and supplies it to a first combustion chamber 3.

In the combustion chamber 3 a first fuel 4a is injected and a mixture is formed by the oxidiser containing flow and the first fuel; thus this mixture is combusted generating a flue flow that is partly expanded in a high pressure turbine 6.

The flue flow partly expanded in the high pressure turbine 6 is then fed to a second combustion chamber 7 wherein a second fuel 4b is injected to form a mixture that is combusted and expanded in a low pressure turbine 8.

The flue flow discharged from the low pressure turbine 8 is diverted in a first flue flow 9 that is cooled (cooler not shown) and then recirculated via a fan 10 to be mixed with fresh air 12 to generate the oxidiser containing flow to be fed to the compressor 2.

A second flue flow 13 is fed to a CO₂ capture unit 15 to be treated in order to extract the CO₂ and store it in a traditional storage plant 16; thus the flue flow having no CO₂ (or a controlled low concentration of CO₂) is discharged via a line 17.

The combustion chamber 3 and/or the combustion chamber 7 have oxidizer pilot injectors 20 arranged to locally inject a pilot oxidiser (pilot meaning that the oxidiser is locally injected) in a zone of the combustion chamber where the flame 21 is housed.

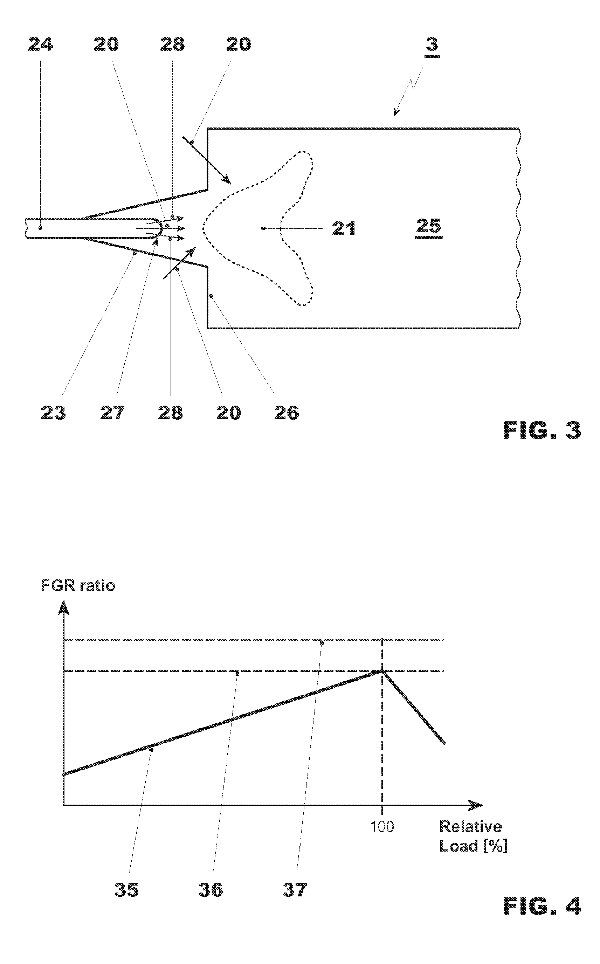

Combustion chambers (figure 3 shows the first combustion chamber of the sequential combustion gas turbine) typically comprise a burner 23 provided with a lance 24 arranged to inject fuel within it.

In addition, the burner 23 has openings for the entrance of air and recirculated flue gas; for example these openings are tangential slots of the conical wall of the burner 23.

Further openings are provided for the entrance of fuel; these openings are provided at the conical wall of the burner 23 (gaseous fuel), in positions close to the tangential slots, and/or at the lance 24 (gaseous or liquid fuel); these openings are not shown.

The burner 23 is then connected to a combustor 25 through a front plate 26.

Different combustion chambers (such as the second combustion chamber of the sequential combustion gas turbine) have substantially the same or similar components even if they generally differ in the constructive details.

The injectors 20 are located on the tip 27 of the burner lance 24 and/or on the side wall of the burner 23 and/or on the front plate 26 of the combustor 25. These injectors 20 are arranged to locally inject the pilot oxidiser within the combustion chamber 3 in a zone where the flame 21 is housed.

In addition, the gas turbine 1 (and in particular its combustion chambers 3 and/or 7) also comprises injectors 28 for locally injecting in the flame zone, at least during part load operation, a pilot fuel together with the pilot oxidiser.

For example these injectors 28 are located at the tip of the lance 24 and can be the same injectors used during normal operation of the gas turbine or different injectors.

The pilot oxidiser comprises oxygen and it is preferably air and more preferably oxygen-enriched air (this strongly reduces the air separation unit requirements and thus its cost, power and size) or, alternatively, pure O₂ or high purity oxygen.

In this respect, the gas turbine 1 is provided with an air separation unit 29 (ASU) that supplies the injectors 20 with the pilot oxidiser.

The gas turbine also has a control unit 30 that drives the injectors 20 in relation with the load of the gas turbine.

The compressed N₂ from the air separation unit can be used for several purposes, such as expansion to produce power, targeted cooling of specific hot gas path components, etc.

Naturally, even if in particular a first combustion chamber of a sequential combustion gas turbine has been described, in different embodiments of the invention also a second combustion chamber of a sequential combustion gas turbine or also combustion chambers of gas turbines not being sequential combustion gas turbines may have the injectors 20.

The operation of the gas turbine of the invention is apparent from that described and illustrated and is substantially the following.

During operation at part load the flame temperature decreases (when compared to the flame temperature during operation at full load) and, in order to keep the stability of the combustion, the amount of oxidiser allowable for the combustion must be increased.

Therefore the control unit 30 operates the injectors 20 such that they locally inject pilot oxidiser in the combustion chambers 3 and/or 7 in the zone where the flame is housed.

Therefore the oxidiser concentration can be locally increased (in the zone of the combustion chamber where the flame is housed) without the need of reducing the flue flow that is recirculated.

In other words, the oxidiser concentration is locally increased injecting pilot oxidiser in the zone where the flame is housed, whereas according to traditional operation the oxidiser concentration is globally increased reducing the flue flow that is recirculated.

In a particularly advantageous embodiment of the invention, in addition to the pilot oxidiser, also pilot fuel (liquid or gaseous fuel) is locally injected in the flame zone through the injectors 28, such that, at part load operation, in addition to a larger amount of oxidiser (provided by the pilot oxidiser injected via injectors 20) also a larger fuel concentration is available in the flame zone; thus a higher flame temperature is locally achieved.

Therefore, since both flame temperature and oxidizer concentration are locally increased in the flame zone, the flame stability and CO/UHC burnout are greatly improved.

During operation at full load the injectors 20 do not inject pilot oxidiser (first embodiment of the method of the invention).

In this respect the flue flow discharged from the turbine 8 are diverted and, for example, a fraction A (such as 45% of the total flue flow discharged from the turbine 8) is fed via the fan 10 to the compressor 2 and mixed with fresh air 12, and a fraction B (such a 55%) is fed to the CO₂ capture unit.

Nevertheless, the control unit 30 may also drive the injectors 20 such that they inject pilot oxidiser during operation at full load (second embodiment of the method of the invention).

In this case the flue flow rate that is recirculated may be increased to an amount greater than 45%, because the amount of oxidiser needed for the combustion is always available in the combustion chamber because it is locally injected.

Figure 4 shows the flue flow gas recirculating ratio (FGR ratio) of a traditional gas turbine (curve 35), of a gas turbine according to the invention without pilot oxidiser injection at full load (curve 36, first embodiment of the method of the invention) and of a gas turbine according to the invention with pilot oxidiser injection also at full load (curve 37, second embodiment of the method of the invention).

Curve 35 shows that the FGR ratio changes with the gas turbine load and has a peak at full load (100% gas turbine load).

In contrast, curve 36 shows that pilot oxidiser injection at part load (or above full load) lets the FGR ratio be kept constant over the whole gas turbine load range.

Curve 37 shows that by increasing the pilot oxidiser injection at part load and also injecting it at full load, the FGR ratio can be further increased (remaining constant over the whole gas turbine load range), overcoming the theoretical FGR ratio limit.

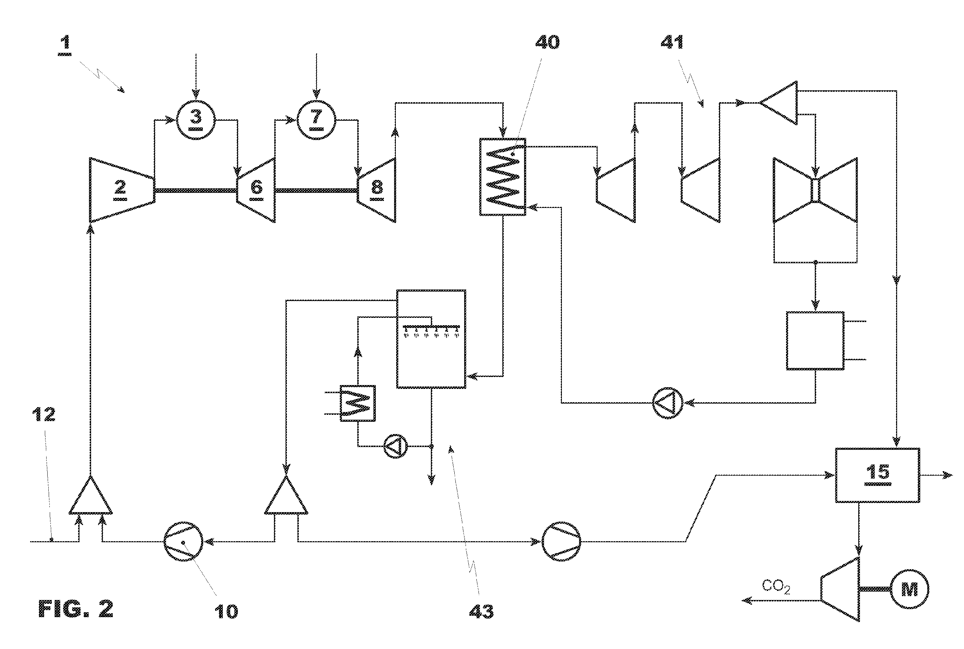

Figure 2 shows a different embodiment of a gas turbine according to the invention; in this figure elements similar to those already described have the same reference numbers.

In this embodiment the flue flow discharged from the turbine 8 is fed to a heat recovery system 40 to produce steam to be expanded in a steam turbine plant 41 (usually made of a high pressure, an intermediate pressure and a low pressure turbine).

The flue flow coming from the heat recovery system 40 is then cooled in a heat exchanger 43 and is then diverted in a first flow to be fed via the fan 10 to the compressor 2 (mixed with fresh air 12) and in a second flow to be fed to the CO₂ capture unit 15.

The present invention also refers to a method for operating a gas turbine.

The method comprises locally injecting, in a zone of one or more combustion chambers where the flame is housed, a pilot oxidiser.

The oxidizer comprises oxygen and it is air, more preferably oxygen enriched air; alternatively it could also be pure oxygen or high purity oxygen.

Injection is driven in relation to the load of the gas turbine.

Moreover, in each combustion chamber less than 1% of oxygen, with respect to the flue flow that circulates in each combustion chamber, is injected, and preferably between 0.4-0.6.

In an alternative embodiment of the method of the invention at least during the part load operation, also a pilot fuel together with the pilot oxidiser is locally injected in the flame zone.

Naturally the features described may be independently provided from one another.

The gas turbine and method conceived in this manner are susceptible to numerous modifications and variants, all falling within the scope of the inventive concept; moreover all details can be replaced by technically equivalent elements.

In practice the materials used and the dimensions can be chosen at will according to requirements and to the state of the art.

### REFERENCE NUMBERS

- 1: gas turbine
- 2: compressor
- 3: first combustion chamber
- 4a: fuel
- 4b: fuel
- 6: high pressure turbine
- 7: second combustion chamber
- 8: low pressure turbine
- 9: first flue flow
- 10: fan
- 12: air
- 13: second flue flow
- 15: CO₂ capture unit
- 16: CO₂ storage
- 17: discharge line
- 20: injector
- 21: flame
- 23: burner
- 24: lance
- 25: combustor
- 26: front plate
- 27: tip of the lance
- 28: further injectors
- 29: air separation unit
- 30: control unit
- 35: flue flow gases recirculation ratio (FGR ratio) without oxidizer injection at any load
- 36: flue flow gases recirculation ratio (FGR ratio) with oxidizer injection at part load and overload
- 37: flue flow gases recirculation ratio (FGR ratio) with oxidizer injection at all loads (i.e. also full load)
- 40: heat recovery system
- 41: steam turbine plant
- 43: heat exchanger

## Claims

1. Gas turbine (1) comprising a compressor (2) that compresses an oxidiser containing flow and supplies it to at least a combustion chamber (3, 7) wherein a fuel is injected and a mixture is formed and combusted generating a flue flow that is expanded in at least a turbine (8), wherein the flue flow downstream of the at least a turbine (8) is diverted in a first flue flow (9) that is mixed with an air flow (12) generating the oxidiser containing flow that is fed to said compressor (2), and a second flue flow (13) that is fed to a CO₂ capture unit (15), **characterised in that** at least one combustion chamber (3, 7) has injectors (20) arranged to locally inject a pilot oxidiser in a zone of the combustion chamber (3, 7) where a flame (21) is housed.

2. Gas turbine (1) as claimed in claim 1, **characterised in that** the pilot oxidiser comprises oxygen.

3. Gas turbine (1) as claimed in claim 2, **characterised in that** the pilot oxidiser comprising oxygen is air, preferably oxygen enriched air or pure oxygen or high purity oxygen.

4. Gas turbine (1) as claimed in claim 1, **characterised by** comprising a control unit (30) that drives the injectors (20) in relation with at least the load of the gas turbine (1).

5. Gas turbine (1) as claimed in claim 1, **characterised by** comprising an air separation unit (29) that supplies the injectors (20) with the pilot oxidiser.

6. Gas turbine (1) as claimed in claim 1, **characterised in that** said injectors (20) are located on the tip (27) of a burner lance (24) and/or on the side wall of the burner (23) and/or on the front plate (26) of the combustor (26).

7. Gas turbine (1) as claimed in claim 1, **characterised in that** the gas turbine (1) is a sequential combustion gas turbine, and **in that** the injectors (20) are provided at the first combustion chamber (3) and/or at the second combustion chamber (7).

8. Gas turbine (1) as claimed in claim 1, **characterised by** comprising further injectors for locally injecting in the flame zone, at least during part load operation, a pilot fuel together with the pilot oxidiser.

9. Method for operating a gas turbine (1) that comprises a compressor (2) compressing an oxidiser containing flow and supplying it to at least a combustion chamber (3, 7) wherein a fuel is injected and a mixture formed and combusted generating a flue flow that is expanded in at least a turbine (8), wherein the flue flow downstream of the at least a turbine (8) is diverted in a first flue flow (9) that is mixed with an air flow (12) generating the oxidiser containing flow that is fed to said compressor (2), and a second flue flow (13) that is fed to a CO₂ capture unit (15), **characterised in that**, in at least one combustion chamber (3, 7), a pilot oxidiser is locally injected in a zone of the combustion chamber (3, 7) where a flame (21) is housed.

10. Method as claimed in claim 9, **characterised in that** the pilot oxidiser comprises oxygen.

11. Method as claimed in claim 10, **characterised in that** the pilot oxidiser comprising oxygen is air, preferably oxygen enriched air or pure oxygen or high purity oxygen.

12. Method as claimed in claim 9, **characterised by** injecting the pilot oxidiser in relation with at least the load of the gas turbine (1).

13. Method as claimed in claim 9, **characterised in that** the gas turbine is a sequential combustion gas turbine, and **in that** the injection is provided at the first combustion chamber (3) and/or at the second combustion chamber (7).

14. Method as claimed in claim 9, **characterised by** injecting less that 1% of oxygen with respect to the flue flow that circulates in each combustion chamber, and preferably between 0.4-0.6.

15. Method as claimed in claim 9, **characterised by** locally injecting in the flame zone, at least during part load operation, a pilot fuel together with the pilot oxidiser.
